# EUROPEAN PATENT SPECIFICATION

(11) **EP 4 187 752 B1**
(45) Date of publication and mention of the grant of the patent: **31.07.2024**
(21) Application number: 22210291.5
(22) Date of filing: 29.11.2022
(51) Int. Cl.: H02J 7/00, G08B 25/01, G08B 29/18, H02J 7/34

(54) **EMERGENCY CALL SYSTEM AND METHOD FOR CONTROLLING OPERATION OF THE SAME**
NOTRUFSYSTEM UND VERFAHREN ZUR STEUERUNG DES BETRIEBS DAVON
SYSTÈME D'APPEL D'URGENCE ET PROCÉDÉ DE COMMANDE DE SON FONCTIONNEMENT

(30) Priority: 30.11.2021 KR 20210168988; 24.10.2022 KR 20220137219
(43) Date of publication of application: 31.05.2023
(73) Proprietor: LG Energy Solution, Ltd., Seoul 07335 (KR)
(72) Inventor: KIM, Hak Soon, 34122 DAEJEON (KR); LEE, Jin Hyun, 34122 DAEJEON (KR); HWANG, Jo Yeon, 34122 DAEJEON (KR)
(74) Representative: Plasseraud IP

(56) References cited:
- EP-A1- 3 154 039
- EP-A1- 3 623 201

## Description

### CROSS-REFERENCE TO RELATED APPLICATION

This application claims priority to Korean Patent Application No. 10-2021-0168988 filed on 11, 30, 2021 and No. 10-2022-0137219 filed on 10. 24. 2022 and all the benefits accruing therefrom under 35 U.S.C. §119.

### BACKGROUND

The present disclosure relates to an emergency call (E-call) system and a method for controlling an operation of the same, and more particularly, to an E-call system configured to improve discharge performance of an E-call battery in a low-temperature environment and a method for controlling an operation of the same.

An emergency call system (hereinafter referred to as an "E-call system") is being developed that automatically makes an emergency call at a time point of a car accident, or allows an occupant to make a direct call to report an accident and request rescue in case of an emergency situation. The system may be applied as part of an infotainment system of a vehicle, or separately as a telematics system of the vehicle. Such an emergency call system may be applied as an emergency communication system in a mobile communication system such as a mobile phone as well as a vehicle.

As such, in the present disclosure, the emergency call system or E-call system refers to an emergency communication system mounted on a mobile communication device as well as a vehicle.

The E-call systems are operated by batteries that are mounted on automobiles and supply electric power to various electronic devices. Here, there may be a situation in which electric power supply to the E-call system is not smooth due to a battery failure that occurs in a vehicle accident. In preparation for the above-mentioned situation, a separate spare battery for the E-call system (hereinafter referred to as an "E-call battery") is used.

Meanwhile, in the case of an E-call battery applied to an automobile, the operating temperature/environmental conditions are harsh and the warranty period is long. In particular, in a very-low-temperature environment, an internal resistance of a battery cell increases, resulting in a sudden voltage drop in the initial stage of discharging. Here, the increase in the internal resistance of the battery cell at a very low temperature is a phenomenon that occurs as the electrochemical reaction inside the cell is lowered, such as the freezing of the electrolyte.

Due to the increase, when the voltage falls below the minimum voltage that has to be supplied to the system connected to the E-call battery, normal operation may be impossible, which may result in the problem that performance implementation is impossible.

However, in the case of the existing E-call battery, a separate auxiliary device/means for preventing a sudden voltage drop caused by the very low temperature is not provided, and as a consequence, a situation arises in which the performance of the battery cell has to be relied upon.

In this regard, in Patent Document 1, the low-temperature driving problem is solved by raising the temperature of the battery by generating heat through low current discharge at a low temperature, and in Patent Document 2, the low-temperature voltage drop problem is solved by increasing the cell voltage by connecting separate cells in series at a low temperature.

However, in Patent Document 1, the battery is used after the temperature is raised through heat by a separate resistor, and thus, it takes time for the battery to heat up and return to the normal temperature, and in some external situations, it is difficult for the battery to return to the normal temperature.

In Patent Document 2, a method is used in which a total cell voltage is increased by connecting additional battery cells in series to suppress a voltage drop caused by an increase in internal resistance due to a low temperature, but in the method, a difference between the voltage drop amount and the additional cell voltage occurs, the output voltage becomes higher than necessary when the additional cell is connected, and so on, which may lead to problems.

### [Prior Art Documents]

### [Patent Documents]

Patent Document 1 KR 0877675 B1 Patent Document 2 JP Patent Publication No 1993-121102 A. EP3623201 A1 relates to an electronic device that performs an emergency call operation using a secondary battery as a power source, and includes a temperature sensor which detects a temperature of the secondary battery, an intermittent emergency call processing unit which performs the emergency call operation intermittently when the temperature detected by the temperature sensor is in a low-temperature state lower than a predetermined value, and a continuous emergency call processing unit which performs the emergency call operation continuously when the temperature detected by the temperature sensor is higher than the predetermined value.

### SUMMARY

The present disclosure has been made in consideration of the aforementioned circumstances, and provides a battery system for E-call including an auxiliary device for preventing a sudden voltage drop due to a very low temperature in a battery for E-call and a method for controlling an operation of the same.

In accordance with an exemplary embodiment, there is provided an emergency call (E-call) system according to claim 1.

The system according to an exemplary embodiment may start operation as the parallel connection switch is initially in an off state. The comparison controller may output a low-temperature signal when the acquired battery usage environment temperature is less than the predetermined reference temperature, and may output a normal-temperature signal when the acquired battery usage environment temperature is equal to or higher than the predetermined reference temperature.

The switch control unit may output a turn-on signal to the parallel connection switch when the low-temperature signal is output from the comparison controller, and may output a turn-off signal to the parallel connection switch when the normal-temperature signal is output from the comparison controller. In this case, the predetermined reference temperature may be set in advance based on a system requirement, and in an exemplary embodiment, may be set to 0 degrees Celsius.

The E-call battery may be driven in a 1 series 2 parallel (1S2P) mode in which the first battery cell and the second battery cell are connected in parallel, when the parallel connection switch is turned on by the switch control unit, and may be driven in a 1 series 1 parallel (1S1P) mode in which parallel connection of the first battery cell and the second battery cell is released, when the parallel connection switch is turned off by the switch control unit.

The E-call battery may include: a first output path that connects an output of the first battery bank to a (+) output terminal of the E-call battery; a second output path that connects an output of the second battery bank to a (+) output terminal of the E-call battery; a parallel connection path that connects the first output path and the second output path in parallel to form an electrical parallel connection between the first battery bank and the second battery bank; and a parallel connection switch disposed on the parallel connection path to open or close the parallel connection path, and the E-call battery may be driven in a 1S2P mode in which the first battery bank and the second battery bank are connected in parallel, when the parallel connection switch is turned on by the switch control unit and may be driven in a 1S1P mode in which parallel connection of the first battery bank and the second battery bank is released and just an output of one of the first battery bank and the second battery bank is connected to the (+) output terminal of the E-call battery, when the parallel connection switch is turned off by the switch control unit.

In this case, the switch control unit may control on/ off of the parallel connection switch, and may control both the first discharge control switch and the second discharge control switch to be on when the parallel connection switch is controlled to be on and may control just one of the first discharge control switch and the second discharge control switch to be on when the parallel connection switch is controlled to be off.

In accordance with another exemplary embodiment, there is provided a method according to claim 11.

The controlling of the parallel connection switch may include turning on the parallel connection switch when the acquired battery usage environment temperature is less than the predetermined reference temperature as the comparison result, and turning off the parallel connection switch when the acquired battery usage environment temperature is equal to or higher than the predetermined reference temperature as the comparison result.

In the discharging of the E-call battery, the E-call battery may be operated in a 1S2P mode in which the first and second battery cells are connected in parallel when the parallel connection switch is turned on in the controlling of the parallel connection switch, and the E-call battery may be operated in a 1S1P mode in which parallel connection of the first battery cell and the second battery cell is released when the parallel connection switch is turned off in the controlling of the parallel connection switch. In this case, the predetermined reference temperature may be 0 degrees Celsius.

The performing of the 1S1P mode driving control may include performing output of a main use bank by selecting the main use bank out of the first and second battery banks and controlling a discharge control switch of the main use bank to be on, and the performing of the output of the main use bank may include: determining a bank use state by calculating at least one of an accumulated use time or a state of charge (SOC) or state of health (SOH) of the first battery bank or the second battery bank; and selecting the main use bank according to the at least one of the accumulated use time or the SOC or SOH of the first battery bank or the second battery bank which is calculated in the determining of the bank use state.

According to exemplary embodiments of the present disclosure, it is possible to improve the discharge performance of a battery in a low-temperature environment.

### BRIEF DESCRIPTION OF THE DRAWINGS

FIG. 1 is a diagram of the relate art;
Each of FIGS. 2(a) and 2(b) is a diagram schematically illustrating a battery system for E-call in accordance with an exemplary embodiment; and
FIG. 3 is a flowchart illustrating a method for controlling an operation of the E-call battery in accordance with an exemplary embodiment.
FIG. 4 is a flowchart illustrating a method for controlling an operation of the E-call battery in accordance with another exemplary embodiment.

### DETAILED DESCRIPTION OF EMBODIMENTS

Hereinafter, exemplary embodiments of the present disclosure will be described in detail with reference to the accompanying drawings so that those skilled in the art may easily perform the present disclosure. However, the present disclosure may be implemented by various modifications and is not limited to the exemplary embodiments described herein. In the drawings, in order to clarify the present disclosure, parts that are not related to description are omitted and like reference numerals represent like elements throughout the specification.

Hereinafter, exemplary embodiments will be described in detail with reference to the drawings.

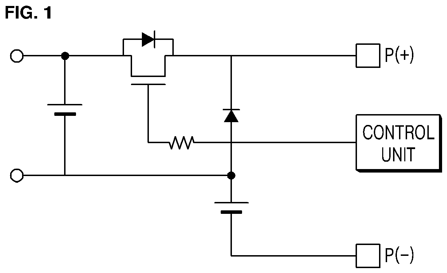

FIG. 1 is a diagram schematically illustrating the related art.

In the configuration of the related art, an additional battery cell is connected in series to increase the output voltage when a voltage drop occurs due to a low temperature. In the related art, it is possible to solve the driving problem at a low temperature; however, a problem of matching the voltage drop due to the low temperature to the additional voltage due to the additional battery cell, a problem that the output voltage becomes higher than necessary when the additional battery cell is connected, or the like, occurs. According to the exemplary embodiments, which will be described later, it is possible to solve the aforementioned problems and effectively cope with a voltage drop problem due to a low temperature. In this invention, a controller (e.g., a temperature data acquisition controller, a switch controller or a comparison controller) may include one or more processors (e.g., microprocessors or microcontrollers).

### 1. E-call System in Accordance with Exemplary Embodiments

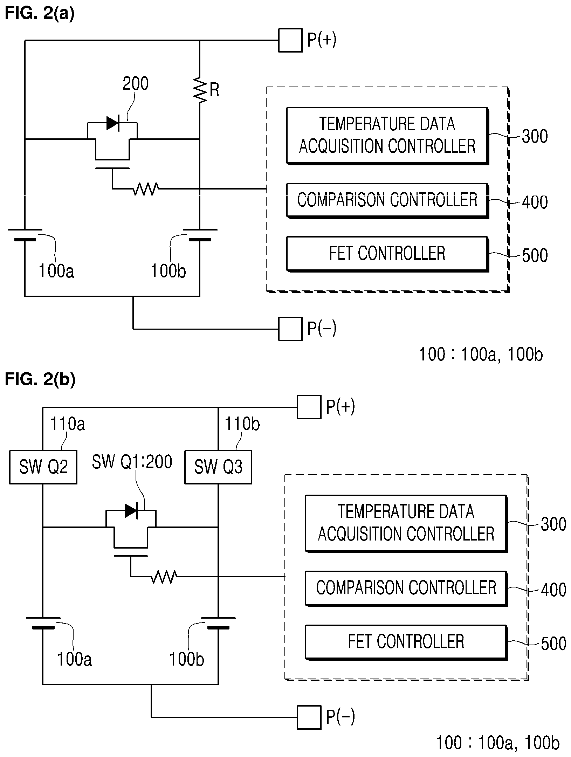

Each of FIGS. 2(a) and 2(b) is a diagram schematically illustrating an emergency call (E-call) system in accordance with an exemplary embodiment.

Referring to FIGS. 2(a) and 2(b), the E-call systems of exemplary embodiments may include the following configurations.

### 1.1 E-call Battery 100

A battery 100 for E-call (E-call battery 100) of an exemplary embodiment has a structure in which two battery banks 100a and 100b are arranged in parallel.

In this case, the first and second battery banks 100a and 100b constituting the E-call battery 100 have a structure arranged in parallel, and mutual electrical parallel connection therebetween is limited according to the on/off operation of a parallel connection switch 200 to be described later.

The E-call battery 100 may be initially driven in a 1 Series 1 Parallel (1S1P) mode in which the first and second battery banks 100a and 100b are not electrically connected in parallel, and thereafter, may be driven in the 1S 1P mode or a 1 Series 2 Parallel (1S2P) mode according to the on/off of the parallel connection switch 200 to be described later.

### < 1 Series 1 Parallel (1S1P) Mode>

The 1S1P mode is a mode in which the parallel connection switch 200 is turned off to open a parallel connection path of the two battery banks 100a and 100b, and the voltage of one battery bank is output. As shown in FIG. 2(a), the output of the first battery bank 100a is connected to an output terminal through a resistor R.

### < 1 Series 2 Parallel (1S2P) Mode>

The 1S2P mode is a mode in which the parallel connection switch 200 is turned on and the two battery banks 100a and 100b are connected in parallel to output a parallel voltage.

### 1.2. Parallel Connection Switch 200

The parallel connection switch 200 is configured to control the connecting or opening of an electrical parallel connection path between the first and second battery banks 100a and 100b constituting the E-call battery 100. The parallel connection switch 200 may be controlled to be on or off by the control of a switch controller 500 to be described later such that the E-call battery 100 is driven in the 1S2P mode or is driven in the 1S 1P mode.

That is, the parallel connection switch 200 is to function as an auxiliary device for preventing a phenomenon that the voltage suddenly drops in the E-call battery 100 due to the very low temperature. Although a filed-effect transistor (FET) is shown as an example of the parallel connection switch 200 in the drawing, this is only an example among various switching devices that may be employed in the exemplary embodiment, and is not limited to the FET.

### 1.3. Temperature data acquisition controller 300

A temperature data acquisition controller 300 is configured to acquire battery usage environment temperature data from an external system (not shown) connected to the E-call battery 100 at regular intervals.

Here, the external system may be a communication device of an electric vehicle or a small mobile device, or a single mobile communication device.

### 1.4. Comparison controller 400

A comparison controller 400 is configured to perform comparison to check whether a battery usage environment temperature value T acquired by the temperature data acquisition controller 300 is equal to or higher than or less than a predetermined reference temperature.

Here, the predetermined reference temperature value may be 0 degrees Celsius.

In other words, the comparison controller 400 performs the comparison to check whether the battery usage environment temperature is less than or equal to or higher than 0 degrees Celsius.

For example, as a result of the comparison, when the battery usage environment temperature is less than the reference temperature of 0 degrees Celsius, a low-temperature signal indicating the fact may be output. On the other hand, as the result of the comparison, when the battery usage environment temperature is equal to or higher than the reference temperature of 0 degrees Celsius, a normal-temperature signal indicating the fact may be output.

### 1.5. Switch Control Unit 500

The switch control unit 500 is configured to control on/off of the parallel connection switch 200 according to the comparison result of the comparison controller 400.

Specifically, as the result of the comparison, when the battery usage environment temperature is less than the reference temperature of 0 degrees Celsius, the parallel connection switch 200 may be turned on. For example, when the low-temperature signal is output from the comparison controller 400, the switch control unit 500 may output a turn-on signal to the parallel connection switch 200 to connect the parallel connection path between the first and second battery banks 100a and 100b and drive the E-call battery 100 in the 1S2P mode. Here, when the turn-on signal is output, the parallel connection switch 200 may implement its turn-on by receiving a voltage of approximately 3.3 V applied from an external control power supply (not shown), for example, a 12V auxiliary battery (not shown).

Meanwhile, as the result of the comparison, when the battery usage environment temperature is higher than the reference temperature of 0 degrees Celsius, the parallel connection switch 200 may be turned off. For example, when the normal-temperature signal is output from the comparison controller 400, the switch control unit 500 may output a turn-off signal to the parallel connection switch 200 to open the parallel connection path between the first and second battery banks 100a and 100b and drive the E-call battery 100 in the 1S 1P mode. Here, when the turn-off signal is output, the parallel connection switch 200 may implement its turn- off by receiving a voltage of 0 V applied.

On the other hand, in another exemplary embodiment shown in FIG. 2(b) described below, the switch control unit 500 controls on/off of a first discharge control switch 110a and a second discharge control switch 110b, as well as the parallel connection switch 200. On/off control algorithm of each switch will be described later.

The temperature data acquisition controller 300, the comparison controller 400, and the switch control unit 500 may be included as one configuration of a battery management system.

As described above, by applying a switch between the battery banks constituting the E-call battery, and when the battery usage environment temperature is very low, discharging the battery in the 1S2P mode by controlling the switch to electrically connect the battery banks to each other in parallel, it is possible to suppress a sudden voltage drop due to an increase in internal resistance of the battery.

### <Another Exemplary Embodiment>

1.6. First Discharge Control switch 110a and Second Discharge Control Switch 110b

In another exemplary embodiment, as shown in FIG. 2(b), a battery pack is provided in which a first discharge control switch 110a and a second discharge control switch 110b are disposed between the first and second battery banks 100a and 100b and the output terminal instead of the resistor R.

In the present exemplary embodiment, as the switch control unit 500 controls the parallel connection switch 200 and the first and second discharge control switches, one of the first and second battery banks 100a and 100b is selectively connected to the output terminal. That is, in the present exemplary embodiment, one of the first and second battery banks may be selectively used for external output depending on the remaining amounts of the first and second batteries, and the other one may be used for coping with a low-temperature voltage drop. In this case, it is desirable to set both the first and second battery banks 100a and 100b to satisfy an output voltage/current requirement of an output cell.

### 2. Method for Controlling Operation of E-call Battery in Accordance with Exemplary Embodiment (1)

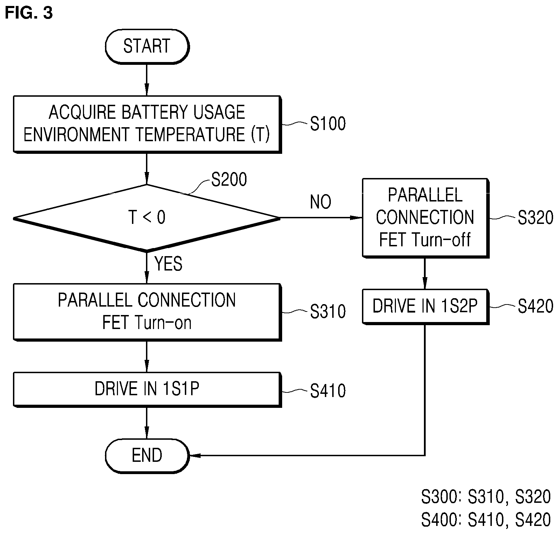

FIG. 3 is a flowchart illustrating a method for controlling an operation of the E-call battery in accordance with an exemplary embodiment.

Referring to FIG. 3, the method according to the present exemplary embodiment may include the following steps.

### 2.1. Temperature Data Acquisition Step (S100)

A temperature data acquisition step S100 is a step of acquiring battery usage environment temperature data from an external system (not shown) connected to the E-call battery 100 having a 1S2P structure at regular intervals.

Here, the external system may be a vehicle.

### 2.2. Reference Temperature Comparison Step (S200)

A reference temperature comparison step S200 is a step of comparing a battery usage environment temperature acquired in the temperature data acquisition step S100 with a predetermined reference temperature to check whether the battery usage environment temperature is less than or equal to or higher than the reference temperature.

Here, the predetermined reference temperature may be 0 degrees Celsius.

In other words, comparison is performed to check whether the acquired battery usage environment temperature is less than or higher than the reference temperature of 0 degrees Celsius.

### 2.3. Switch Control Step (S300)

A switch control step S300 is a step of controlling on/off of the parallel connection switch 200 that controls electrical parallel connection between the first and second battery banks 100a and 100b constituting the E-call battery 100 of the 1S2P structure according to the result of comparison in the reference temperature comparison step S200.

Specifically, as the result of the comparison, when the acquired battery usage environment temperature is less than the reference temperature of 0 degrees Celsius, the parallel connection switch 200 may be turned on (S310).

On the other hand, as the result of the comparison, when the acquired battery usage environment temperature is equal to or higher than the reference temperature of 0 degrees Celsius, the parallel connection switch 200 may be turned off (S320).

Here, the parallel connection switch 200 is initially set to the turn-off state, and the electrical parallel connection between the first and second battery banks 100a and 100b of the E-call battery 100 are cut off and the operation in the 1S1P mode is performed.

### 2.4. Battery Discharging Operation Step (S400)

A battery discharging operation step S400 is a step of discharging the E-call battery 100 with an electric connection structure corresponding to the control operation of the parallel connection switch 200 in the switch control step S300.

Specifically, when the parallel connection switch 200 is turned on in the switch control step S300 (S310), the first and second battery banks 100a and 100b of the E-call battery 100 are electrically connected in parallel to each other and are operated in the 1S2P mode (S410).

On the other hand, when the parallel connection switch 200 is turned off in the switch control step S300 (S320), the electrical parallel connection between the first and second battery banks 100a and 100b of the E-call battery 100 are cut off, and the operation in the 1S1P mode is performed (S420).

### 3. Method for Controlling Operation of E-call Battery in Accordance with Exemplary Embodiment (2)

In another exemplary embodiment according to FIG. 2(b), one of the first and second battery banks 100a and 100b may be selected as a use bank, that is, a battery bank for output by controlling the first and second discharge control switches. The selection of the battery bank for output may be made according to an accumulated use time or a state of charge (SOC) or state of health (SOH) of the battery banks, and in this case, the switch control unit transmits a switching control signal to the battery banks. For example, by setting the first battery bank as an output cell when the residual capacity of the first battery bank is greater, and setting the second battery bank as an output cell when the residual capacity of the second battery bank is greater during use, the cell for coping with voltage drop is able to be interchangeably used as the output cell as compared to using only one of the first and second battery banks as the output cell.

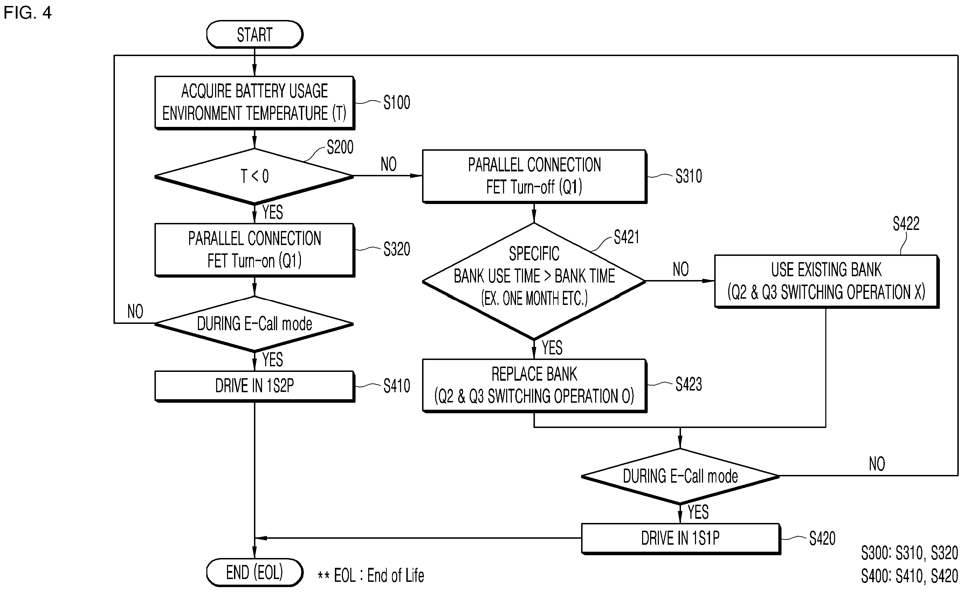

An operation procedure of the battery in accordance with the exemplary embodiment shown in FIG. 2(b) will be described with reference to FIG. 4. The same reference numerals are used for the same parts as in the procedure of FIG. 3.

### 3.1. Temperature Data Acquisition Step (S100)

A temperature data acquisition step S 100 is a step of acquiring battery usage environment temperature data from an external system (not shown) connected to the E-call battery 100 having a 1S2P structure at regular intervals.

Here, the external system may be a communication system of a vehicle or a small mobile device, or an independent mobile communication device.

### 3.2. Reference Temperature Comparison Step (S200)

A reference temperature comparison step S200 is a step of comparing a battery usage environment temperature acquired in the temperature data acquisition step S100 with a predetermined reference temperature to check whether the battery usage environment temperature is less than or equal to or higher than the reference temperature.

Here, the predetermined reference temperature may be 0 degrees Celsius.

In other words, comparison is performed to check whether the acquired battery usage environment temperature is less than or higher than a predetermined reference temperature, for example, 0 degrees Celsius.

### 3.3. Switch Control Step (S300)

A switch control step S300 is a step of controlling on/off of the parallel connection switch 200 that controls electrical parallel connection between the first and second battery banks 100a and 100b constituting the E-call battery 100 of the 1S2P structure according to the result of comparison in the reference temperature comparison step S200.

Specifically, as the result of the comparison, when the acquired battery usage environment temperature is less than the reference temperature of 0 degrees Celsius, the parallel connection switch 200 (Q1) may be turned on (S310). In this case, the first and second discharge control switches 110a and 110b (Q2, Q3) are also turned on, so that the first and second battery banks 100a and 100b may be connected in parallel, and may be driven in the 1S2P mode in a battery discharging operation step to be described later.

The driving of the battery in the 1S2P mode may be started according to a predetermined E-call mode operation control signal. When the battery usage environment temperature is lower than the predetermined reference temperature at the time of driving in the E-call mode, 1S2P mode driving is performed to improve the low-temperature discharge performance.

On the other hand, as the result of the comparison, when the acquired battery usage environment temperature is equal to or higher than a predetermined reference temperature, for example, 0 degrees Celsius, the parallel connection switch 200 may be turned off to prepare the 1S1P mode driving (S320).

In this case, the parallel connection switch 200 is set to the turn-off state, and the electrical parallel connection between the first and second battery banks 100a and 100b of the E-call battery 100 are cut off and the operation in the 1S1P mode is performed in the battery discharging operation step S400 to be described later.

### 3.4. Battery Discharging Operation Step (S400)

A battery discharging operation step S400 is a step of discharging the E-call battery 100 with an electric connection structure corresponding to the control operation of the parallel connection switch 200 in the switch control step S300.

### 3.4.1. 1S2P Mode Driving Control Step (S410)

Specifically, when the parallel connection switch 200 is turned on in the switch control step S300 (S310), the first and second battery banks 100a and 100b of the E-call battery 100 are electrically connected in parallel to each other and are operated in the 1S2P mode during the E-call mode (S410). When the mode is not the E-call mode, that is, when the E-call mode operation signal is not received, the process returns to step S100.

### 3.4.2. 1S1P Mode Driving Control Step (S420)

When the parallel connection switch 200 is turned off in the switch control step S300 (S320), the electrical parallel connection between the first and second battery banks 100a and 100b of the E-call battery 100 are cut off, and the operation in the 1S1P mode is performed during operating in the E-call mode (S420). When the mode is not the E-call mode, that is, when the E-call mode operation signal is not received, the process returns to step S100.

Meanwhile, in the present exemplary embodiment, before driving in the 1S1P driving mode, a process of deciding which of the first and second battery banks is to be used as the main bank is performed. For example, in the previous steps S200 and S320, when the battery usage environment temperature is not less than a predetermined reference temperature, for example, 0 degrees Celsius, the parallel connection switch 200 (Q1) is turned off, and each of the output terminals the first and second battery banks outputs or blocks the bank voltage to the output terminal P(+) according to the on/off control of the first and second discharge control switches 110a and 110b (Q2 and Q3). In this case, in order to drive in the 1S1P mode, a main use bank output procedure of selecting one of the first and second battery banks 100a and 100b and outputting the voltage of the selected battery bank to the output terminal P(+) is performed, and for selection of the main use bank, the switch control unit 500 may select the main use battery through a bank use state determination step (S421), a use bank maintenance step (S422), and a use bank replacement step (S423). In the 1S1P mode, the discharge control switch on the side of the bank determined as the main use bank is turned on so that only the corresponding bank is connected to the output terminal. The main use bank selection step may be implemented through the following procedure.

### (1) Bank Use State Determination Step (S421)

A determination is made as to whether the accumulated use time of each of the first and second battery banks exceeds a predetermined reference use time. In an exemplary embodiment, for the initial connection state of the battery banks, the on/off state of the switches Q2 and Q3 may be determined so that only one battery bank is a main bank connected to an output terminal, and in this case, a determination is made as to whether the accumulated use time of the main bank exceeds a predetermined reference use time.

In another exemplary embodiment, in the bank use state determination step S421, the state of charge (SOC) or state of health (SOH) of each battery bank may be calculated, and the use state may be determined by determining whether the calculated value is less than a predetermined reference value.

In this way, the main use bank may be maintained or selected through additional procedures to be described below, based on at least one calculated value of the accumulated use time or the SOC or SOH of the first or second battery bank, which are calculated according to the bank use state determination.

In acquiring the accumulated use time, the SOC, and SOH of each battery bank, a well-known technique that is obvious to a person skilled in the art is used.

### (2) Use Bank Maintenance Step (S422)

When the main bank is determined, and when the accumulated use time of the main bank is less than or equal to a predetermined reference time, the use of the main bank is maintained. That is, the discharge control switch on the side of the main bank is controlled to be on, and the discharge control switch on the other bank side is controlled to be off. When the initial main bank is determined, the main bank discharge control switch is in the on state, and thus the first and second discharge control switches are maintained without the switching operation.

In another exemplary embodiment, when the charging capacity of the main bank is equal to or greater than a predetermined reference value, the use of the corresponding bank may be maintained. Even in this case, the switching operation of the first and second discharge control switches is not performed.

### (3) Use Bank Replacement Step or Use Bank selection Step (S423)

When the main bank is determined, and when the accumulated use time of the main bank is greater than the predetermined reference time, the use bank is replaced. Alternatively, when the charging capacity of the main bank is less than the predetermined reference value, the use bank is replaced. The replacement of the use bank is achieved by switching the first and second discharge control switches from on to off or from off to on. In any case, in the 1S 1P mode, the parallel connection switch 200 is controlled to be off, and the first and second discharge control switches 110a and 110b are selectively controlled such that one is on and the other is off.

When the main bank is not determined, a bank to be used may be selected according to the control of the switch control unit 500. A bank to be used is selected according to the accumulated use time of each battery bank, and the SOC and the SOH of each battery bank acquired in the bank use state determination step S421 above. A criterion for selecting the bank to be used may be to select the one with the smaller accumulated use time or the one with the larger SOC or SOH, between the two battery banks.

Through the procedures, in the present exemplary embodiment, at a low temperature, the battery bank connected in parallel and used to prevent voltage drop may be used in the 1S1P mode, thereby increasing the operating life of the E-call battery system.

Meanwhile, in the exemplary embodiments, a battery bank may be a battery module of a single battery cell or of an aggregate of a plurality of battery cells, or a battery pack that is an aggregate of a plurality of battery modules. In addition, although not shown, like a typical battery structure, a battery management system (BMS) for controlling the first and second battery banks may be provided, and the temperature data acquisition controller 300, the comparison controller 400, and the switch control unit 500 may be included in the BMS.

## Claims

1. An emergency call, E-call, system, comprising:
an E-call battery including first and second battery banks (100a, 100b);
a temperature data acquisition controller (300) configured to acquire battery usage environment temperature data, at regular intervals, from an external system connected to the E-call battery;
a parallel connection switch (200) configured to control an electrical parallel connection between the first and second battery banks of the E-call battery; and
a switch controller (500) configured to control on/off of the parallel connection switch (200) based on a battery usage environment temperature value acquired by the temperature data acquisition controller (300), wherein
the system is configured to output the voltage of one battery bank when the parallel connection switch (200) is off.

2. The E-call system of claim 1, wherein the parallel connection switch (200) is configured to be initially in an off state.

3. The E-call system of claim 1, further comprising a comparison controller (400) configured to compare the battery usage environment temperature value acquired by the temperature data acquisition controller (300) with a predetermined reference temperature,
wherein the comparison controller (400) is configured to:
output a low-temperature signal when the acquired battery usage environment temperature value is less than the predetermined reference temperature; and
output a normal-temperature signal when the acquired battery usage environment temperature value is equal to or higher than the predetermined reference temperature.

4. The E-call system of claim 3, wherein the switch control unit (500) is configured to
output a turn-on signal to the parallel connection switch (200) when a low-temperature signal is output from the comparison controller (400); and
output a turn-off signal to the parallel connection switch (200) when a normal-temperature signal is output from the comparison controller (400),
wherein the low-temperature signal is for a low temperature, the normal-temperature signal is of a normal temperature, and the low temperature is lower than the normal temperature.

5. The E-call system of claim 3, wherein the predetermined reference temperature is 0 degrees Celsius.

6. The E-call system of claim 1, wherein the E-call battery comprises:
a first output path configured to connect an output of the first battery bank (100a) to an output terminal of the E-call battery;
a second output path configured to connect an output of the second battery bank (100b) to the output terminal of the E-call battery; and
a parallel connection path configured to connect the first output path and the second output path in parallel to form the electrical parallel connection between the first battery bank (100a) and the second battery bank (100b),
wherein:
the parallel connection switch (200) is disposed on the parallel connection path to open or close the parallel connection path; and
the E-call battery is configured to be driven in a 1 series 2 parallel, 1 S2P, mode in which the first battery bank (100a) and the second battery bank (100b) are connected in parallel, when the parallel connection switch is turned on by the switch control unit, and is configured to be driven in a 1 series 1 parallel, 1S1P mode in which a parallel connection of the first battery bank (100a) and the second battery bank (100b) is released and only an output of one of the first battery bank (100a) and the second battery bank (100b) is connected to the output terminal of the E-call battery, when the parallel connection switch (200) is turned off by the switch control unit (500).

7. The E-call system of claim 6, wherein a resistance element (R) having a predetermined resistance component is disposed on the second output path.

8. The E-call system of claim 6, wherein a first discharge control switch (110a) and a second discharge control switch (110b) for opening and closing the first output path and the second output path are disposed on the first output path and the second output path, respectively.

9. The E-call system of claim 8, wherein the switch control unit (500) is configured to:
control on/off of the parallel connection switch (200);
control both the first discharge control switch (110a) and the second discharge control switch (110b) to be on when the parallel connection switch (200) is controlled to be on; and
control only one of the first discharge control switch (110a) and the second discharge control switch (1 10b) to be on when the parallel connection switch (200) is controlled to be off.

10. The E-call system of claim 9, wherein the switch control unit (500) is configured to:
control the first discharge control switch (110a) to be on when a period of use of the first battery bank (100a) is equal to or shorter than a predetermined reference period of use; and
control the second discharge control switch (110b) to be on when the period of use of the first battery bank (100a) is longer than the predetermined reference period of use.

11. A method for controlling an operation of an emergency call, E-call, battery including first and second battery banks (100a, 100b) arranged in parallel, the method comprising:
acquiring temperature data by acquiring battery usage environment temperature data, at regular intervals, from an external system connected to the E-call battery;
comparing a battery usage environment temperature value acquired in the acquiring of the temperature data with a predetermined reference temperature to determine whether the battery usage environment temperature value is less than or equal to or higher than the predetermined reference temperature;
controlling a parallel connection switch (200) to be on/off according to a comparison result in the comparing with the predetermined reference temperature, the parallel connection switch being configured to control an electrical parallel connection between the first and second battery banks, wherein, when the parallel connection switch (200) is off, the output of only one of the first and second battery banks (100a, 100b) is output; and
discharging the E-call battery with an electric connection structure corresponding to a control of the parallel connection switch in the controlling of the parallel connection switch.

12. The method of claim 11, wherein the controlling of the parallel connection switch comprises:
turning on the parallel connection switch (200) when the acquired battery usage environment temperature value is less than the predetermined reference temperature based on the comparison result; and
turning off the parallel connection switch (200) when the acquired battery usage environment temperature value is equal to or higher than the predetermined reference temperature based on the comparison result.

13. The method of claim 12, wherein the discharging of the E-call battery comprises:
performing a 1 series 2 parallel, 1S2P, mode driving control under which the E-call battery is discharged in the 1S2P mode in which the first and second battery banks (100a, 100b) are connected in parallel when the parallel connection switch is turned on in the controlling of the parallel connection switch; and
performing a 1 series 1 parallel, 1S1P, mode driving control under which the E-call battery is discharged in the 1S1P mode in which a parallel connection of the first battery bank (100a) and the second battery bank (100b) is released when the parallel connection switch (200) is turned off in the controlling of the parallel connection switch (200).

14. The method of claim 13, wherein the performing of the 1S1P mode driving control comprises performing output of a main use bank by selecting the main use bank out of the first and second battery banks (100a, 100b) and controlling a discharge control switch of the main use bank to be on.

15. The method of claim 14, wherein the performing of the output of the main use bank comprises:
determining a bank use state by calculating at least one of an accumulated use time or a state of charge, SOC, or state of health, SOH, of the first battery bank (100a) or the second battery bank (100b); and
selecting the main use bank according to the at least one of the accumulated use time or the SOC or SOH of the first battery bank (100a) or the second battery bank (100b) which is calculated in the determining of the bank use state.

16. The method of claim 11, wherein the predetermined reference temperature is 0 degrees Celsius.

## Patentansprüche

1. Notruf-, E-Call - emergency call, System, umfassend:
eine E-Call-Batterie, welche eine erste und eine zweite Batteriebank (100a, 100b) umfasst;
eine Temperaturdatenerfassungssteuereinrichtung (300), welche dazu eingerichtet ist, Batterienutzungsumgebungstemperaturdaten in regulären Intervallen von einem mit der E-Call-Batterie verbundenen externen System zu erfassen;
einen Parallelschaltungsschalter (200), welcher dazu eingerichtet ist, eine elektrische Parallelschaltung zwischen der ersten und der zweiten Batteriebank der E-Call-Batterie zu steuern; und
eine Schaltersteuereinrichtung (500), welche dazu eingerichtet ist, ein Ein/Aus des Parallelschaltungsschalters (200) auf Grundlage eines durch die Temperaturdatenerfassungssteuereinrichtung (300) erfassten Batterienutzungsumgebungstemperaturwerts zu steuern, wobei
das System dazu eingerichtet ist, die Spannung einer Batteriebank auszugeben, wenn der Parallelschaltungsschalter (200) aus ist.

2. E-Call-System nach Anspruch 1, wobei der Parallelschaltungsschalter (200) dazu eingerichtet ist, zunächst in einem Aus-Zustand zu sein.

3. E-Call-System nach Anspruch 1, ferner umfassend eine Vergleichssteuereinrichtung (400), welche dazu eingerichtet ist, den durch die Temperaturdatenerfassungssteuereinrichtung (300) erfassten Batterienutzungsumgebungstemperaturwert mit einer vorbestimmten Referenztemperatur zu vergleichen,
wobei die Vergleichssteuereinrichtung (400) eingerichtet ist, zum:
Ausgeben eines Niedertemperatursignals, wenn der erfasste Batterienutzungsumgebungstemperaturwert niedriger ist als die vorbestimmte Referenztemperatur; und
Ausgeben eines Normaltemperatursignals, wenn der erfasste Batterienutzungsumgebungstemperaturwert gleich wie oder höher als die vorbestimmte Referenztemperatur ist.

4. E-Call-System nach Anspruch 3, wobei die Schaltersteuereinheit (500) eingerichtet ist, zum
Ausgeben eines Einschaltsignals für den Parallelschaltungsschalter (200), wenn ein Niedertemperatursignal von der Vergleichssteuereinrichtung (400) ausgegeben wird; und
Ausgeben eines Ausschaltsignals für den Parallelschaltungsschalter (200), wenn ein Normaltemperatursignal von der Vergleichssteuereinrichtung (400) ausgegeben wird,
wobei das Niedertemperatursignal für eine niedrige Temperatur ist, das Normaltemperatursignal für eine normale Temperatur ist und die niedrige Temperatur niedriger ist als die normale Temperatur.

5. E-Call-System nach Anspruch 3, wobei die vorbestimmte Referenztemperatur 0 Grad Celsius beträgt.

6. E-Call-System nach Anspruch 1, wobei die E-Call-Batterie umfasst:
einen ersten Ausgangspfad, welcher dazu eingerichtet ist, einen Ausgang der ersten Batteriebank (100a) mit einem Ausgangsanschluss der E-Call-Batterie zu verbinden;
einen zweiten Ausgangspfad, welcher dazu eingerichtet ist, einen Ausgang der zweiten Batteriebank (100b) mit dem Ausgangsanschluss der E-Call-Batterie zu verbinden; und
einen Parallelschaltungspfad, welcher dazu eingerichtet ist, den ersten Ausgangspfad und den zweiten Ausgangspfad parallel zu schalten, um die elektrische Parallelschaltung zwischen der ersten Batteriebank (100a) und der zweiten Batteriebank (100b) zu bilden,
wobei:
der Parallelschaltungsschalter (200) auf dem Parallelschaltungspfad angeordnet ist, um den Parallelschaltungspfad zu öffnen oder zu schließen; und
die E-Call-Batterie dazu eingerichtet ist, in einem 1-Reihe-2-Parallel-, 1S2P - 1 series 2 parallel, Modus angetrieben zu werden, in welchem die erste Batteriebank (100a) und die zweite Batteriebank (100b) parallel geschaltet sind, wenn der Parallelschaltungsschalter durch die Schaltersteuereinheit eingeschaltet ist, und dazu eingerichtet ist, in einem 1-Reihe-1-Parallel-, 1S1P - 1 series 1 parallel, Modus angetrieben zu werden, in welchem eine Parallelschaltung der ersten Batteriebank (100a) und der zweiten Batteriebank (100b) freigegeben ist und nur ein Ausgang einer der ersten Batteriebank (100a) und der zweiten Batteriebank (100b) mit dem Ausgangsanschluss der E-Call-Batterie verbunden ist, wenn der Parallelschaltungsschalter (200) durch die Schaltersteuereinheit (500) ausgeschaltet ist.

7. E-Call-System nach Anspruch 6, wobei ein Widerstandselement (R), welches eine vorbestimmte Widerstandskomponente aufweist, auf dem zweiten Ausgangspfad angeordnet ist.

8. E-Call-System nach Anspruch 6, wobei ein erster Entladungssteuerungsschalter (110a) und ein zweiter Entladungssteuerungsschalter (110b) zum Öffnen und Schließen des ersten Ausgangspfads und des zweiten Ausgangspfads auf dem ersten Ausgangspfad bzw. dem zweiten Ausgangspfad angeordnet sind.

9. E-Call-System nach Anspruch 8, wobei die Schaltersteuereinheit (500) eingerichtet ist, zum:
Steuern eines Ein/Aus des Parallelschaltungsschalters (200);
Steuern sowohl des ersten Entladungssteuerungsschalters (110a) als auch des zweiten Entladungssteuerungsschalters (110b) auf Ein, wenn der Parallelschaltungsschalter (200) auf Ein gesteuert ist; und
Steuern nur eines des ersten Entladungssteuerungsschalters (110a) und des zweiten Entladungssteuerungsschalters (110b) auf Ein, wenn der Parallelschaltungsschalter (200) auf Aus gesteuert ist.

10. E-Call-System nach Anspruch 9, wobei die Schaltersteuereinheit (500) eingerichtet ist, zum:
Steuern des ersten Entladungssteuerungsschalters (110a) auf Ein, wenn ein Zeitraum einer Nutzung der ersten Batteriebank (100a) gleich wie oder kürzer als ein vorbestimmter Referenzzeitraum einer Nutzung ist; und
Steuern des zweiten Entladungssteuerungsschalters (110b) auf Ein, wenn der Zeitraum einer Nutzung der ersten Batteriebank (100a) länger ist als der vorbestimmte Referenzzeitraum einer Nutzung.

11. Verfahren zum Steuern eines Betriebs einer Notruf-, E-Call - emergency call, Batterie, welche eine erste und eine zweite Batteriebank (100a, 100b) umfasst, die parallel angeordnet sind, wobei das Verfahren umfasst:
Erfassen von Temperaturdaten durch ein Erfassen von Batterienutzungsumgebungsdaten in regulären Intervallen von einem mit der E-Call-Batterie verbundenen externen System;
Vergleichen eines bei dem Erfassen der Temperaturdaten erfassten Batterienutzungsumgebungstemperaturwerts mit einer vorbestimmten Referenztemperatur, um zu bestimmen, ob der Batterienutzungsumgebungstemperaturwert niedriger als oder gleich wie oder höher als die vorbestimmte Referenztemperatur ist;
Steuern eines Parallelschaltungsschalters (200) auf Ein/Aus gemäß einem Vergleichsergebnis bei dem Vergleichen mit der vorbestimmten Referenztemperatur, wobei der Parallelschaltungsschalter dazu eingerichtet ist, eine elektrische Parallelschaltung zwischen der ersten und der zweiten Batteriebank zu steuern, wobei, wenn der Parallelschaltungsschalter (200) aus ist, der Ausgang nur einer der ersten und der zweiten Batteriebank (100a, 100b) ausgegeben wird; und
Entladen der E-Call-Batterie mit einer elektrischen Verbindungsstruktur entsprechend einer Steuerung des Parallelschaltungsschalters bei dem Steuern des Parallelschaltungsschalters.

12. Verfahren nach Anspruch 11, wobei das Steuern des Parallelschaltungsschalters umfasst:
Einschalten des Parallelschaltungsschalters (200), wenn der erfasste Batterienutzungsumgebungstemperaturwert niedriger ist als die vorbestimmte Referenztemperatur, auf Grundlage des Vergleichsergebnisses; und
Ausschalten des Parallelschaltungsschalters (200), wenn der erfasste Batterienutzungsumgebungstemperaturwert gleich wie oder höher als die vorbestimmte Referenztemperatur ist, auf Grundlage des Vergleichsergebnisses.

13. Verfahren nach Anspruch 12, wobei das Entladen der E-Call-Batterie umfasst:
Durchführen einer 1-Reihe-2-Parallel-, 1S2P- 1 series 2 parallel, Modus-Antriebssteuerung, unter welcher die E-Call-Batterie in dem 1S2P-Modus entladen wird, in welchem die erste und die zweite Batteriebank (100a, 100b) parallel geschaltet sind, wenn der Parallelschaltungsschalter bei dem Steuern des Parallelschaltungsschalters eingeschaltet ist; und
Durchführen einer 1-Reihe-1-Parallel-, 1S1P - 1 series 1 parallel, Modus-Antriebssteuerung, unter welcher die E-Call-Batterie in dem 1S2P-Modus entladen wird, in welchem eine Parallelschaltung der ersten Batteriebank (100a) und der zweiten Batteriebank (100b) freigegeben ist, wenn der Parallelschaltungsschalter (200) bei dem Steuern des Parallelschaltungsschalters (200) ausgeschaltet ist

14. Verfahren nach Anspruch 13, wobei das Durchführen der 1S1P-Modus-Antriebssteuerung ein Durchführen einer Ausgabe einer Hauptnutzungsbank durch ein Auswählen der Hauptnutzungsbank aus der ersten und der zweiten Batteriebank (100a, 100b) und ein Steuern eines Entladungssteuerungsschalters der Hauptnutzungsbank auf Ein umfasst.

15. Verfahren nach Anspruch 14, wobei das Durchführen der Ausgabe der Hauptnutzungsbank umfasst:
Bestimmen eines Banknutzungszustands durch ein Berechnen wenigstens eines aus einer akkumulierten Nutzungszeit oder einem Ladezustand, SOC - state of charge, oder einem Alterungszustand, SOH - state of health, der ersten Batteriebank (100a) oder der zweiten Batteriebank (100b); und
Auswählen der Hauptnutzungsbank gemäß dem wenigstens einen aus der akkumulierten Nutzungszeit oder dem SOC oder dem SOH der ersten Batteriebank (100a) oder der zweiten Batteriebank (100b), welches bei dem Bestimmen des Banknutzungszustands berechnet wird.

16. Verfahren nach Anspruch 11, wobei die vorbestimmte Referenztemperatur 0 Grad Celsius beträgt.

## Revendications

1. Système d'appel d'urgence, comprenant :
une batterie d'appel d'urgence comportant de premier et deuxième groupes de batteries (100a, 100b) ;
un dispositif de commande d'acquisition de données de température (300) configuré pour acquérir des données de température d'environnement d'utilisation de batterie, à des intervalles réguliers, à partir d'un système externe connecté à la batterie d'appel d'urgence ;
un commutateur de connexion en parallèle (200) configuré pour commander une connexion électrique en parallèle entre les premier et deuxième groupes de batterie de la batterie d'appel d'urgence ; et
un dispositif de commande de commutateur (500) configuré pour commander l'activation/la désactivation du commutateur de connexion en parallèle (200) sur la base d'une valeur de température d'environnement d'utilisation de batterie acquise par le dispositif de commande d'acquisition de données de température (300), dans lequel
le système est configuré pour délivrer en sortie la tension d'un groupe de batteries lorsque le commutateur de connexion en parallèle (200) est désactivé.

2. Système d'appel d'urgence selon la revendication 1, dans lequel le commutateur de connexion en parallèle (200) est configuré pour être initialement dans un état désactivé.

3. Système d'appel d'urgence selon la revendication 1, comprenant en outre un dispositif de commande de comparaison (400) configuré pour comparer la valeur de température d'environnement d'utilisation de batterie acquise par le dispositif de commande d'acquisition de données de température (300) à une température de référence prédéterminée,
dans lequel le dispositif de commande de comparaison (400) est configuré pour :
délivrer en sortie un signal de basse température lorsque la valeur de température d'environnement d'utilisation de batterie acquise est inférieure à la température de référence prédéterminée ; et
délivrer en sortie un signal de température normale lorsque la valeur de température d'environnement d'utilisation de batterie acquise est supérieure ou égale à la température de référence prédéterminée.

4. Système d'appel d'urgence selon la revendication 3, dans lequel l'unité de commande de commutateur (500) est configurée pour
délivrer en sortie un signal d'activation vers le commutateur de connexion en parallèle (200) lorsqu'un signal de basse température est délivré en sortie à partir du dispositif de commande de comparaison (400) ; et
délivrer en sortie un signal de désactivation vers le commutateur de connexion en parallèle (200) lorsqu'un signal de température normale est délivré en sortie à partir du dispositif de commande de comparaison (400),
dans lequel le signal de basse température concerne une basse température, le signal de température normale concerne une température normale et la basse température est inférieure à la température normale.

5. Système d'appel d'urgence selon la revendication 3, dans lequel la température de référence prédéterminée est de 0 degré Celsius.

6. Système d'appel d'urgence selon la revendication 1, dans lequel la batterie d'appel d'urgence comprend :
un premier trajet de sortie configuré pour connecter une sortie du premier groupe de batteries (100a) à une borne de sortie de la batterie d'appel d'urgence ;
un deuxième trajet de sortie configuré pour connecter une sortie du deuxième groupe de batteries (100b) à la borne de sortie de la batterie d'appel d'urgence ; et
un trajet de connexion en parallèle configuré pour connecter le premier trajet de sortie et le deuxième trajet de sortie en parallèle pour former la connexion électrique en parallèle entre le premier groupe de batteries (100a) et le deuxième groupe de batteries (100b),
dans lequel :
le commutateur de connexion en parallèle (200) est disposé sur le trajet de connexion en parallèle pour ouvrir ou fermer le trajet de connexion en parallèle ; et
la batterie d'appel d'urgence est configurée pour être excitée dans un mode 1 série 2 parallèle, 1S2P, dans lequel le premier groupe de batteries (100a) et le deuxième groupe de batteries (100b) sont connectés en parallèle, lorsque le commutateur de connexion en parallèle est activé par l'unité de commande de commutateur, et est configurée pour être excitée dans un mode 1 série 1 parallèle, 1S1P, dans lequel une connexion en parallèle du premier groupe de batteries (100a) et du deuxième groupe de batteries (100b) est libérée et seulement une sortie de l'un du premier groupe de batteries (100a) et du deuxième groupe de batteries (100b) est connectée à la borne de sortie de la batterie d'appel d'urgence, lorsque le commutateur de connexion en parallèle (200) est désactivé par l'unité de commande de commutateur (500).

7. Système d'appel d'urgence selon la revendication 6, dans lequel un élément de résistance (R) ayant un composant de résistance prédéterminé est disposé sur le deuxième trajet de sortie.

8. Système d'appel d'urgence selon la revendication 6, dans lequel un premier commutateur de commande de décharge (110a) et un deuxième commutateur de commande de décharge (110b) pour ouvrir ou fermer le premier trajet de sortie et le deuxième trajet de sortie sont disposés sur le premier trajet de sortie et le deuxième trajet de sortie, respectivement.

9. Système d'appel d'urgence selon la revendication 8, dans lequel l'unité de commande de commutateur (500) est configurée pour :
commander l'activation/la désactivation du commutateur de connexion en parallèle (200) ;
commander l'activation à la fois du premier commutateur de commande de décharge (110a) et du deuxième commutateur de commande de décharge (110b) lors de la commande de l'activation du commutateur de connexion en parallèle (200) ; et
commander l'activation d'un seul parmi le premier commutateur de commande de décharge (110a) et le deuxième commutateur de commande de décharge (110b) lors de la commande de la désactivation du commutateur de connexion en parallèle (200).

10. Système d'appel d'urgence selon la revendication 9, dans lequel l'unité de commande de commutateur (500) est configurée pour :
commander l'activation du premier commutateur de commande de décharge (110a) lorsqu'une période d'utilisation du premier groupe de batteries (100a) est inférieure ou égale à une période d'utilisation de référence prédéterminée ; et
commander l'activation du deuxième commutateur de commande de décharge (110b) lorsque la période d'utilisation du premier groupe de batteries (100a) est supérieure à la période d'utilisation de référence prédéterminée.

11. Procédé de commande d'un fonctionnement d'une batterie d'appel d'urgence comportant de premier et deuxième groupes de batteries (100a, 100b) agencés en parallèle, le procédé comprenant :
l'acquisition de données de température par acquisition de données de température d'environnement d'utilisation de batterie, à des intervalles réguliers, à partir d'un système externe connecté à la batterie d'appel d'urgence ;
la comparaison d'une valeur de température d'environnement d'utilisation de batterie acquise lors de l'acquisition des données de température à une température de référence prédéterminée pour déterminer si la valeur de température d'environnement d'utilisation de batterie est inférieure ou égale ou bien supérieure à la température de référence prédéterminée ;
la commande de l'activation/désactivation d'un commutateur de connexion en parallèle (200) selon un résultat de comparaison lors de la comparaison à la température de référence prédéterminée, le commutateur de connexion en parallèle étant configuré pour commander une connexion électrique en parallèle entre les premier et deuxième groupes de batterie, dans lequel, lorsque le commutateur de connexion en parallèle (200) est désactivé, la sortie d'un seul parmi les premier et deuxième groupes de batterie (100a, 100b) est délivrée ; et
la décharge de la batterie d'appel d'urgence avec une structure de connexion électrique correspondant à une commande du commutateur de connexion en parallèle lors de la commande du commutateur de connexion en parallèle.

12. Procédé selon la revendication 11, dans lequel la commande du commutateur de connexion en parallèle comprend :
l'activation du commutateur de connexion en parallèle (200) lorsque la valeur de température d'environnement d'utilisation de batterie acquise est inférieure à la température de référence prédéterminée sur la base du résultat de comparaison ; et
la désactivation du commutateur de connexion en parallèle (200) lorsque la valeur de température d'environnement d'utilisation de batterie acquise est supérieure ou égale à la température de référence prédéterminée sur la base du résultat de comparaison.

13. Procédé selon la revendication 12, dans lequel la décharge de la batterie d'appel d'urgence comprend :
la réalisation d'une commande d'excitation en mode 1 série 2 parallèle, 1S2P, dans laquelle la batterie d'appel d'urgence est déchargée dans le mode 1S2P dans lequel les premier et deuxième groupes de batteries (100a, 100b) sont connectés en parallèle lorsque le commutateur de connexion en parallèle est activé lors de la commande du commutateur de connexion en parallèle ; et
la réalisation d'une commande d'excitation en mode 1 série 1 parallèle, 1S1P, dans laquelle la batterie d'appel d'urgence est déchargée dans le mode 1S1P dans lequel une connexion en parallèle du premier groupe de batteries (100a) et du deuxième groupe de batteries (100b) est libérée lorsque le commutateur de connexion en parallèle (200) est désactivé lors de la commande du commutateur de connexion en parallèle (200).

14. Procédé selon la revendication 13, dans lequel la réalisation de la commande d'excitation en mode 1S1P comprend la réalisation d'une sortie d'un groupe d'utilisation principal par sélection du groupe d'utilisation principal parmi les premier et deuxième groupes de batterie (100a, 100b) et la commande de l'activation d'un commutateur de commande de décharge du groupe d'utilisation principal.

15. Procédé selon la revendication 14, dans lequel la réalisation de la sortie du groupe d'utilisation principal comprend :
la détermination d'un état d'utilisation de groupe par calcul d'au moins un parmi un temps d'utilisation cumulé ou un état de charge, SOC, ou état de santé, SOH, du premier groupe de batterie (100a) ou du deuxième groupe de batterie (100b) ; et
la sélection du groupe d'utilisation principal selon l'au moins un parmi le temps d'utilisation cumulé ou le SOC ou SOH du premier groupe de batterie (100a) ou du deuxième groupe de batterie (100b) qui est calculé lors de la détermination de l'état d'utilisation de groupe.

16. Procédé selon la revendication 11, dans lequel la température de référence prédéterminée est de 0 degré Celsius.
